# EUROPEAN PATENT SPECIFICATION

(11) **EP 0 336 013 B1**
(45) Date of publication and mention of the grant of the patent: **01.02.1995**
(21) Application number: 88119974.9
(22) Date of filing: 30.11.1988
(51) Int. Cl.: G01N 35/02, G01N 33/53

(54) **Immunoagglutination measurement apparatus**
Immuno-Agglutinationsmessgerät
Dispositif de mesure de l'immunoagglutination

(30) Priority: 08.04.1988 JP 86916/88
(43) Date of publication of application: 11.10.1989
(73) Proprietor: TOA MEDICAL ELECTRONICS CO., LTD., Hyogo-ku Kobe-shi Hyogo-ken (JP)
(72) Inventor: Okada, Satoru, Kako-gun Hyogo-ken (JP); Mizuno, Yoshiteru, Himeji-shi Hyogo-ken (JP); Izumi, Takayoshi, Iwaya Nada-ku Kobe-shi Hyogo-ken (JP); Otani, Tishihiro, Yamadacho Himeji-shi Hyogo-ken (JP)
(74) Representative: Füchsle, Klaus, Dipl.-Ing.

(56) References cited:
- EP-A- 0 216 026
- WO-A-88/02120
- FR-A- 2 270 577
- US-A- 3 617 222
- US-A- 3 917 455

## Description

This invention relates to an immunoagglutination measurement apparatus for quantifying antigens or antibodies by individually counting the particles of an agglutinate of an insoluble carrier produced by an antigen-antibody reaction.

Measurement of a tumor marker such as alpha-fetprotein (AFP) or carcinoembryonic antigen (CEA) has become extremely important in diagnosing cancers and in observing the progress of cancers.

Radioimmuno assay (RIA) and enzymeimmuno assay (EIA) methods are used in apparatus which measure immunity utilizing the antigen-antibody reaction. As is well known in the art, both methods enable highly sensitive measurement, but the RIA method requires troublesome waste treatment since radioactive substances are used, while the EIA method requires an extended period of time for measurements.

In order to solve these problems, an apparatus has been conceived in which antigen or antibody quantification is carried out by measuring, by a particle counting method, the degree of agglutination that accompanies a latex agglutination reaction utilizing the antigen-antibody reaction. An example is an immunoagglutination measurement apparatus available under the brandname PAMIA-10 from TOA Medical Electronics Co. Ltd of Japan.

In accordance with this apparatus, a specimen containing an antigen or antibody to be measured is mixed with a reagent containing latex particles to which an antibody or an antigen is bonded that reacts specifically with the antigen or antibody in the specimen. As a result of mixing the specimen and the reagent, an antigen-antibody reaction takes place that causes the latex particles to coalesce together through the medium of the antigen or antibody in the specimen, thereby forming an agglutinate. The latex agglutinate is introduced into a flowcell where it is irradiated with light, the light scattered from the individual particles of the agglutinate is measured, the degree of agglutination is calculated from the number of non-agglutinated particles and the number of agglutinated particles distinguished from each other by measurement of the scattered light, and the degree of agglutination is converted into a figure representing the concentration of antigen or antibody in the specimen. In this way the antigen or antibody of interest within the specimen is quantified.

This conventional immunoagglutination measurement apparatus is in need of certain improvements.
(a) Owing to the sharp increase in the tumor markers to be examined, there is an increase in the amount of specimen and reagent required. A reduction in this amount is desired.
(b) Doubling of processing capability per unit time is strongly desired.
(c) An improvement in operability is required, namely efficient, accurate and safe operation in a small amount of space.
(d) Since mixing for the purpose of stabilizing and promoting the agglutination reaction is performed by rotating a rotor within a reaction vessel, the rotor sustains long-term wear and becomes unbalanced as a result. Thus there the risk of a decline in the mixing efficiency of the rotor.

EP-A-216026 discloses automatic analysis apparatus comprising a rotatable table carying a plurality of reaction vessels. There are other tables carrying various reagents. There are means for stirring, temperature control, rotating the tables and transferring reagents.

FR-A-2270577 discloses a table carying a plurality of reaction vessels and means to oscillate the table by changes of its direction of rotation to shake the contents of the reaction vessels.

According to the present invention there is provided immunoagglutination measurement apparatus as defined in claim 1 below.

The present invention can provide an immunoagglutination measurement apparatus improved with regard to items (a) through (d) mentioned above.

In one embodiment of the present invention, the foregoing object is attained by providing an immunoagglutination measurement apparatus for mixing together a specimen, which contains an antigen or antibody to be measured, and a reagent containing insoluble carriers to which is bonded an antibody or antigen that specifically reacts with the antigen or antibody in the specimen, whereby an antigen-antibody reaction takes place that causes the insoluble carriers to mutually agglutinate through the medium of
the antigen or antibody in the specimen, introducing the agglutinate to a detecting section whereby a signal based on electrical differences or optical differences among particles is generated, and measuring this signal by particle counting means to obtain the degree of agglutination of the insoluble carriers as a numerical value followed by converting the numerical value, thereby measuring the amount of antigen or antibody contained in the specimen, the apparatus comprising a reversibly rotatable buffer solution table on which a plurality of buffer solution vessels are mounted while maintained in an isothermal state, a reversibly rotatable reagent table on which a plurality of reagent vessels are mounted while maintained in an isothermal state, a reversibly rotatable and shakable reaction table on which a plurality of reaction vessels are supported while maintained in an isothermal state, a transfer section for transferring racks on which specimen vessels are mounted, a dispatch section connected to the transfer section for supplying the racks to the transfer section, a recovery section connected to the transfer section for recovering the racks from the transfer section, first sampling and dispensing means for sampling a buffer solution from the buffer solution vessels on the buffer solution table and dispensing the buffer solution into the reaction vessels on the reaction table, second sampling and dispensing means for sampling a specimen from the specimen vessels and dispensing the specimen into the reaction vessels on the reaction table, third sampling and dispensing means for sampling a reagent from the reagent vessels on the reagent table and dispensing the reagent into the reaction vessels on the reaction table, fourth sampling and dispensing means for sampling a reaction solution, in which an agglutination reaction of the insoluble carriers is brought about by mixing of the buffer solution, specimen and reagent, from the reaction vessels on the reaction table, and dispensing the reaction solution to a sample chamber communicating with a detecting section, and cleansing means for discharging the reaction solution from the reaction vessels and cleansing the reaction vessels.

In operation, a specimen vessel is transferred to a predetermined position by the rack transfer section, a buffer solution is sampled from a predetermined buffer solution vessel and is dispensed into a reaction vessel by the first sampling and dispensing means, and the specimen is sampled from the specimen vessel and dispensed into the reaction vessel by the second sampling and dispensing means. A reagent is sampled from a predetermined reagent vessel and dispensed into the reaction vessel by the third sampling and dispensing means. In successive dispensing and mixing together of the buffer solution, specimen and reagent within the reaction vessel, the entire reaction table is shaken continuously. Since the reaction vessel is maintained in an isothermal state and is shaken and agitated uniformly at such time, the reaction solution, namely the mixture of the buffer solution, specimen and reagent, is stabilized within the reaction vessel and the antigen-antibody reaction is promoted to form the agglutinate of the insoluble carriers.

Upon passage of a prescribed period of time, the reaction solution is sampled from the reaction vessel and dispensed into the sample chamber by the fourth sampling and dispensing means.

The reaction solution dispensed into the sample chamber is transferred to the detecting section, through which the insoluble carriers are passed in the form of a sheathed stream and in which a signal is generated based upon a difference in terms of electrical or optical characteristics. The degree of agglutination of the insoluble carriers is obtained as a numerical value using data indicative of the number of non-agglutinated carriers and the number of agglutinated carriers determined by measuring the signal generated. Converting the value of agglutination makes it possible to quantify the antigen or antibody of interest contained in the specimen.

Other features and advantages of the present invention will be apparent from the following description taken in conjunction with the accompanying drawings, in which like reference characters designate the same or similar parts throughout the figures thereof.

The drawings illustrate a preferred embodiment of an immunoagglutination measurement apparatus in accordance with the present invention, in which:
Fig. 1 is a schematic plan view;
Fig. 2 is a sectional view taken along line A-A of Fig. 1;
Fig. 2a is a partially enlarged top view as seen from line B-B in Fig. 2;
Fig. 3 is a side view of an embodiment of sampling and dispensing means in Fig. 1;
Fig. 4 is a side view of the principal portion of cleansing means shown in Fig. 1;
Fig. 4a is an enlarged side view showing a distal end portion of a pipette;
Fig. 5 is a basic structural view of a liquid level detecting circuit;
Fig. 6 is a schematic view of hydraulic circuitry peripheral to the sampling and dispensing means;
Fig 7. is a schematic view of hydraulic circuitry peripheral to a detecting section;
Fig. 8 is a schematic view of hydraulic circuitry peripheral the cleansing means;
Fig. 9 is a plan view of an optical detecting section;
Fig 10 is a basic structure view of a measurement circuit;
Fig. 11 is a distribution of particle sizes conforming to the degree of agglutination;
Fig. 12 shows a calibration curve; and
Fig. 13 shows antigen concentration - agglutination curves.

A preferred embodiment of an immunoagglutination measurement apparatus according to the invention will now be described with reference to the drawings.

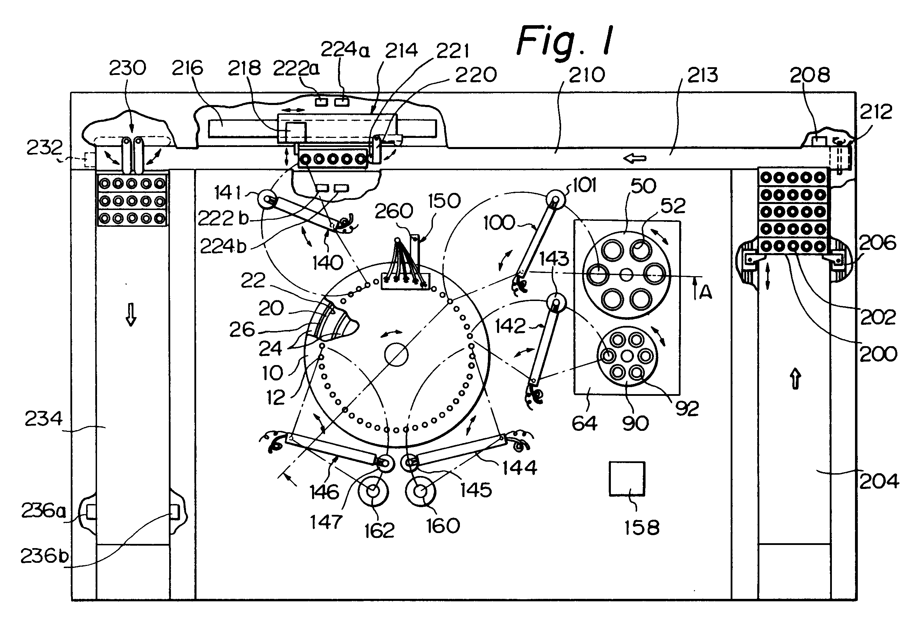

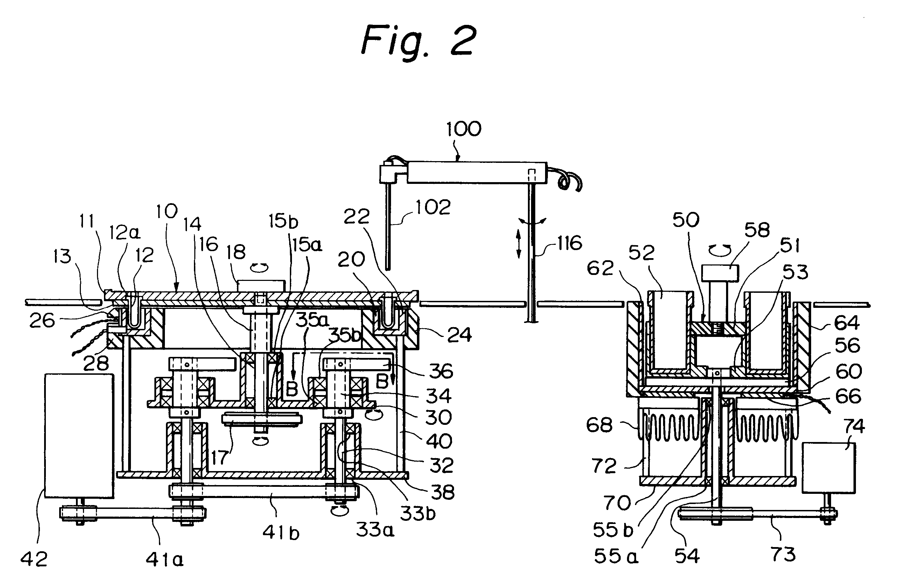

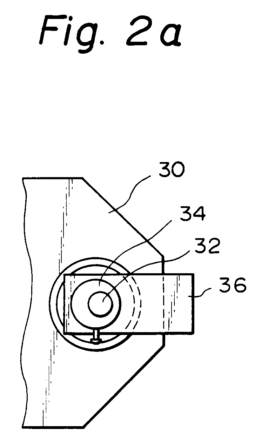

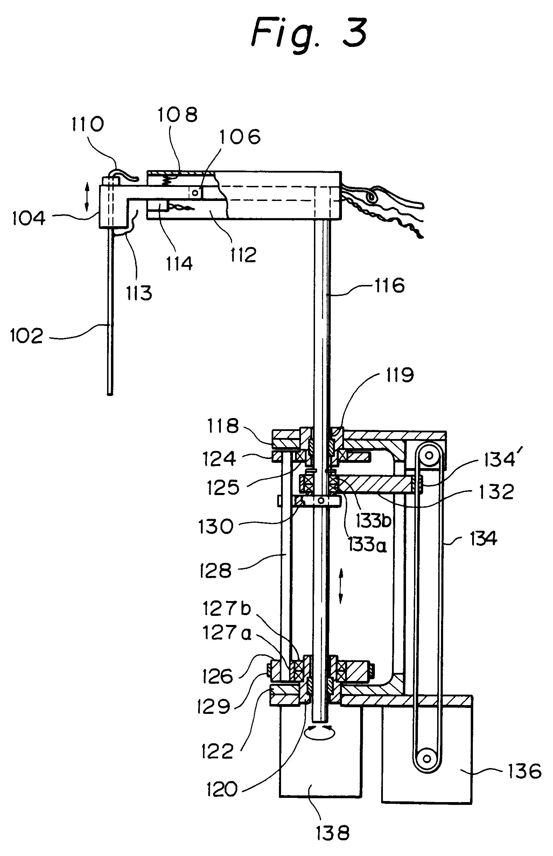

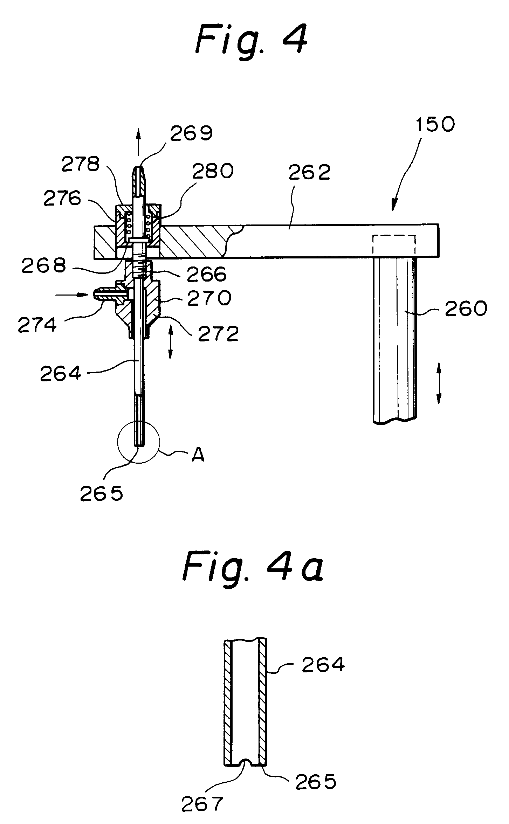

Fig. 1 is a plan view of a preferred embodiment of an immunoagglutination measurement apparatus in accordance with the present invention, Fig. 2 is a sectional view taken along line A-A of Fig. 1, Fig. 2a is a partially enlarged top view as seen from line B-B in Fig. 2, Fig. 3 is a side view of an embodiment of sampling and dispensing means, Fig. 4 is a side view of the principal portion of cleansing means, and Fig. 4a is an enlarged view showing a portion enclosed by a circle A in Fig. 4.

The apparatus shown in Figs. 1 and 2 includes a disk-shaped reaction table 10 reversibly rotatable together with a shaft 14. The reaction table 10 comprises an upper table 11 and a lower table 13. A total of 48 reaction vessels 12 each of which has a projecting rim 12a are equiangularly supported by the reaction table 10 along its circumference in a state where the projecting rims 12a are clamped between the upper table 11 and lower table 13.

The apparatus also includes a disk-shaped buffer solution table 50 reversibly rotatable together with a shaft 54. The table 50 comprises an upper table 51 and a lower table 53 on which six buffer solution vessels 52 are detachably mounted and equiangularly arranged. The buffer solution is for suppressing a non-specific reaction, which is a cause of measurement error, when specifically measuring the antigen or antibody contained in a specimen, and in this way brings forth the desired specific reaction.

A reversibly rotatable, disk-shaped reagent table 90 is similar to the buffer solution table 50 but slightly smaller in size and detachably mounts six equiangularly arranged reagent vessels 92. The reagent contains insoluble carriers, e.g., latex particles having a diameter of about 0.75 »m, to the periphery of which are bonded an antibody or antigen that specifically reacts with an antigen or antibody of interest contained in a specimen.

The reaction vessels 12 are maintained at a temperature of, e.g., 43 - 47°C, by an isothermal section 20 provided in the lower portion of the reaction table 10. The isothermal section 20, which is made of a material, such as aluminum, having a high thermal conductivity, is provided with a groove 22 surrounding the reaction vessels 12. A sensor 28 for sensing temperature is embedded in the isothermal section 20, a heater 26 whose temperature is controllable is attached to the outer circumference of the isothermal section 20, and the periphery of the isothermal section 20 is covered with a heat insulating material, such as a polyurethane resin, having a low thermal conductivity. The upper table 11 and lower table 13 of the reaction table 10 are also made of a material, such as synthetic resin, exhibiting a low thermal conductivity. As a result, the isothermal section 20 is maintained at a constant temperature irrespective of the ambient temperature and, hence, the temperature of the reaction vessels 12 is held constant.

The rotary shaft 14 of the reaction table 10 is rotatably supported by a retainer 30 via bearings 15a, 15b and is connected by a belt 17 to a motor (not shown) mounted on the retainer 30. The central portion of the reaction table 10 is attached to the rotary shaft 14 by a fixture 18 and is supported on the retainer 30 by a support 16. The reaction table 10 is reversibly rotatable relative to the retainer 30 about the shaft 14. A shaft 34 is freely rotatably supported on the retainer 30 via bearings 35a, 35b and is coupled eccentrically to a shaft 32 freely rotatably supported on a base plate 38 via bearings 33a, 33b. The shaft 32 is connected to a motor 42 by belts 41a, 41b. Accordingly, when the motor 42 rotates, the shafts 32, 34 rotate so that the retainer 30 is shaken relative to the base plate 38, thereby shaking and agitating the reaction table 10.

Attached to the shaft 34 is a balancer 36 for cancelling vibration, produced by movement of the center of gravity, generated when the reaction table 10 and retainer 30 shake.

The buffer solution vessels 52 are kept cool at a temperature of, e.g., 10 - 15°C, by an isothermal section 60 provided in the lower portion of the buffer solution table 50. The reagent table 90, which is disposed close to the buffer solution table 50, is of some construction, hence, the reagent vessels 92 are kept cool in the same manner.

The rotary shaft 54 of the buffer solution table 50 is freely rotatably supported on a base plate 70 via bearings 55a, 55b and is connected to a motor 74 by a belt 73. In order to hold the temperature of the buffer solution vessels constant, the isothermal portion 60, which is made of a material, such as aluminum, having good thermoconductivity, and a radiator 68 are disposed in close contact with a cooling element 66 so as to embrace the same. The cooling element 66 is temperature controllable and utilizes the Peltier effect. The overall arrangement is supported on the base plate 70 by a support 72. The isothermal section 60 is provided with a sensor (not shown) for sensing temperature. A support 56 attached to the shaft 54 is capable of rotating while maintained in good thermal conduction with the isothermal section 60. The buffer solution table 50, which is rotated together with the support 56, is placed on the support 56 in such a manner that the support 56 and lower table 53 come into close thermal contact.

The support 56 and the lower table 53 are both made of a material, such as aluminum, having good thermal conductivity. A cylindrical case 62 provided surrounding the upper table 51 and the buffer solution table 50 is made of a synthetic resin exhibiting little thermal conductivity. The outer circumferences of the case 62 and the isothermal section 60 are covered with a heat insulating material, such as a polyurethane resin, having a low thermal conductivity. Thus, the buffer solution table 50 and the buffer solution vessels 52 are kept cool. A handle 58 is attached to the upper table 51 for the purpose of readily detaching and carrying the buffer solution table 50. This is convenient when changing the buffer solution vessels.

Sampling and dispensing devices 100, 140, 142, 144 and 146 having substantially the same construction will now be described. Fig. 3 is a side view of an embodiment of a sampling and dispensing device 100. The device includes an arm 112 attached at right angles to a shaft 116 rotatably and slidably supported on retainers 118, 122 via guides 119, 120. A pipette 102 is attached to a retainer 104 at the distal end of the arm 112 so as to lie parallel to the shaft 116 when in the normal state. The retainer 104 is rotatably supported on the arm 112 via a shaft 106 under a load applied by a spring 108. The distal end portion of the pipette 102 preferably is formed gradually reduced inner and outer diameters in order to improve sampling and dispensing accuracy. A syringe (not shown) for taking up and discharging liquid is connected to the pipette 102.

A sensor 114 for sensing the retainer 104 is attached to the arm 112. The retainer 104 ordinarily is situated in the vicinity of the sensor 114 under the urging force of the spring 108. However, when the retainer 104 is contacted by a foreign object on descent of the pipette 102, the retainer 104 is rotated about the shaft 106 against the force of the spring 108 and separates from the sensor 114. As a result, an abnormal condition is sensed by the sensor 114. At such time the shaft 116 is immediately raised to elevate the pipette 102. This prevents the pipette from being damaged. Connected to the pipette 102 is a conductor 113 so that a sensor circuit 310, described below, can sense whether the pipette 102 has come into contact with the surface of the liquid in the vessels. Thus, since the liquid level can be sensed even when the height thereof differs, sampling and dispensing can be carried out in a reliable manner.

As evident from Fig. 3, a rotating member 124 rotatably attached to the guide 119 via a bearing 125 and a rotating member 126 rotatably attached to the guide 120 via bearings 127a, 127b are interconnected by a connecting rod 128. The connecting rod 128 has a guide 130 fixedly attached to the shaft 116. The rotating member 126 is connected to a motor 138 by belt 129. Accordingly, when the motor 138 rotates, the rotating member 126 and the connecting rod 128 turn, so that the guide 130 also rotates together with the connecting rod 128. Since the guide 130 is fixedly attached to the shaft 116, the shaft 116 also rotates so that the arm 112 and pipette 102 rotate accordingly.

A coupling member 132 is mounted on the shaft 116 via bearings 133a, 133b attached to the shaft 116 so as to be rotatable about the shaft but whose movement axially of the shaft is limited. A motor 136 is connected to the coupling member 132 by a belt 134 fixed thereto by a belt fixing portion 134′. Accordingly, when the motor 136 rotates, the coupling member 132 is moved up or down. Since the coupling member 132 is attached to the shaft 116 and fixed axially thereof, the shaft 116 moves up or down. As a result, the arm 112 and the pipette 102 are also movable up or down. Thus, the arm 112 and pipette 102 are capable of reciprocative linear movement axially of the shaft 116 and can rotate reversibly about the shaft 116.

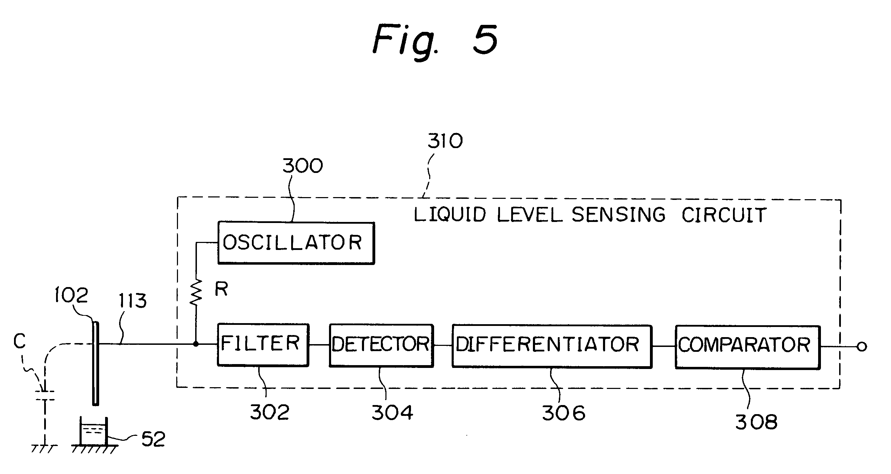

Fig. 5 is a schematic view of the aforementioned circuit for sensing the liquid level. The conductor 113 connected to the pipette 102 is connected to a high-frequency oscillator 300 having a frequency of, e.g., 2 MHz, via a resistor R having a resistance of, e.g., 10 K-ohms, and to a band-pass filter 302. A detector 304, differentiator 306 and comparator 308 are serially connected to the output side of the filter 302. The buffer solution vessel 52 is placed upon a grounded metal surface. Electric capacitance C between the pipette 102 and the grounded surface varies depending upon whether the tip of the pipette 102 is or is not in contact with the surface of the liquid in the stock solution vessel 52. Accordingly, a high-frequency signal whose amplitude corresponds to the capacitance C is obtained at the output of the RC-type integrating circuit formed by the resistor R and capacitance C, namely at the input to the filter 302. By passing this high-frequency signal through the prescribed band-pass filter 302, the dependence of the amplitude thereof on the capacitance C can be made conspicuous. This high-frequency signal is converted into a DC signal by being detected by the detector 304, and a change in the DC signal level of this DC signal is picked up by the differentiator 306. The output of the differentiator 306 is compared with a predetermined value by the comparator 308, whereby it is sensed whether the pipette 102 has come into contact with the surface of the liquid.

A cleansing device 150 will now be described. Fig. 4 is a side view showing the principal portion of an embodiment of the cleansing device 150. The device includes a shaft 260 reciprocatable linearly by a driving source (not shown). An arm 262 is attached at right angles to the shaft 260. Retainers 276, 278 are attached to the distal end of the arm 262 and receive a pipette 264 that is passed therethrough so as to lie parallel to the shaft 260. A spring 280 embraced by the retainer 278 and a projection on the pipette 264 is provided on the inner side of the retainer 276. Accordingly, when an object strikes the pipette 264 on descent of the shaft 260, the projection 268 compresses the spring 280 so that the pipette 264 can be stopped while in intimate abutting contact with the object. When the shaft 260 rises so that the force acting upon the pipette 264 is removed, the pipette 264 is returned to its lowered state by the action of the spring 280. The upper end of the pipette 264 has a discharge port 269 communicating with a waste liquid recovery section. As shown in Fig. 4a, the lower end of the pipette 264 defines an intake port 265 provided with a notch 267. The latter makes it possible to suck in liquid even when the intake port 265 is in abutting contact with the bottom of the reaction vessel 12. A cleansing part 270 is attached to a threaded portion 266 of the pipette 264 and is provided with a nipple 274, which serves as a supply port, so as to communicate with a gap 272 formed about the periphery of the pipette 264. When a cleansing fluid is supplied by the nipple 274, the solution flows through the gap 272 and is discharged from the periphery of the pipette 264. A plurality of pipettes of the same construction can be mounted on the arm 262 of the cleansing device 150 so that a plurality of adjacent reaction vessels 12 can be washed simultaneously.

The movement of specimen vessels 202 will now be described with reference to Fig. 1. A plurality of racks 200 each have five specimen vessels 202 mounted thereon. Since the racks 200 can be carried individually, this is convenient when loading the specimen vessels. An example of a specimen used is human blood serum.

The racks 200 are set transversely in a dispatch section 204 in a longitudinal array. All of the racks 200 in the dispatch section 204 are moved at one time by a rack moving device 206 in a direction from the bottom to the top of the page in Fig. 1. When the leading rack is sensed by approaching a sensor 208, the moving device 206 stops.

The leading rack is placed upon a belt 213 travelling leftward in Fig. 1 and is thereby moved leftward along a transfer section 210. When the travelling rack 200 contacts a stopper 218 attached to a rack moving device 214, the rack is stopped and an arm 220 having a rubber member 221 attached thereto rotates and urges the rack from behind. The presence of the rack is sensed when the rack approaches sensors 224a, 224b. The rack held between the stopper 218 and the arm 220 is indexed successively by the rack moving device 214 from right to left along a guide 216 by an amount equivalent to one specimen vessel 202. A fixed amount of the specimens is successively taken up from the specimen vessels 202 by the sampling and dispensing means 140 while the presence of the vessels is being confirmed by the sensors 222a, 222b. The rack 200 has five specimen vessel mounting portions each of which is provided with one through-hole, for a total of five through-holes. The presence of the specimen vessels 202 is confirmed when these vessels pass by the sensors 222a, 222b.

When the sampling of the five specimens ends, the stopper 218 and arm 220 return to their original positions to free the rack, after which the rack 200 is moved leftward along the transfer section 210. When the rack 200 is sensed by approaching a sensor 232, the rack is urged into a recovery section 234 by a rack moving device 230. The rack moving device 230 then returns to its original position.

When a rack 200 received by the recovery section 234 is sensed by passing between sensors 236a, 236b, no additional racks 200 can be accomodated by the recovery section 234.

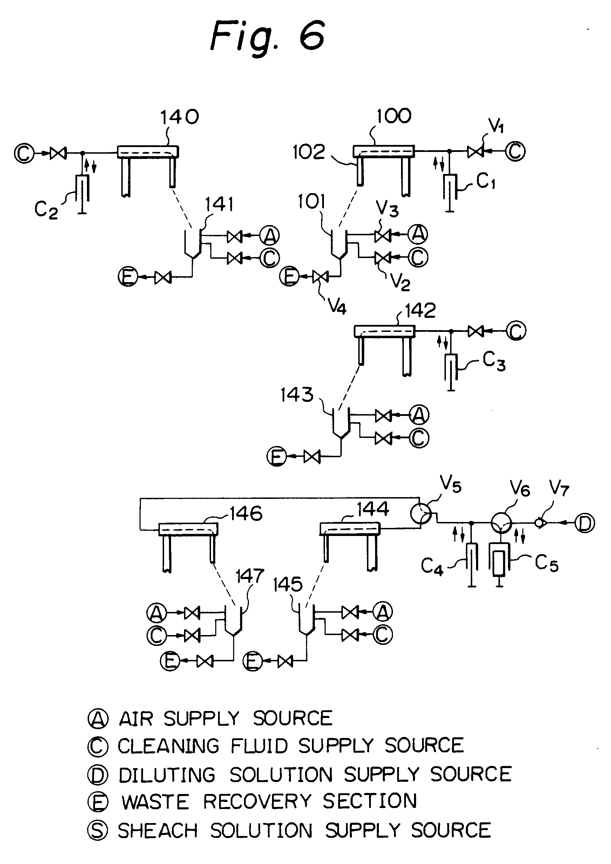

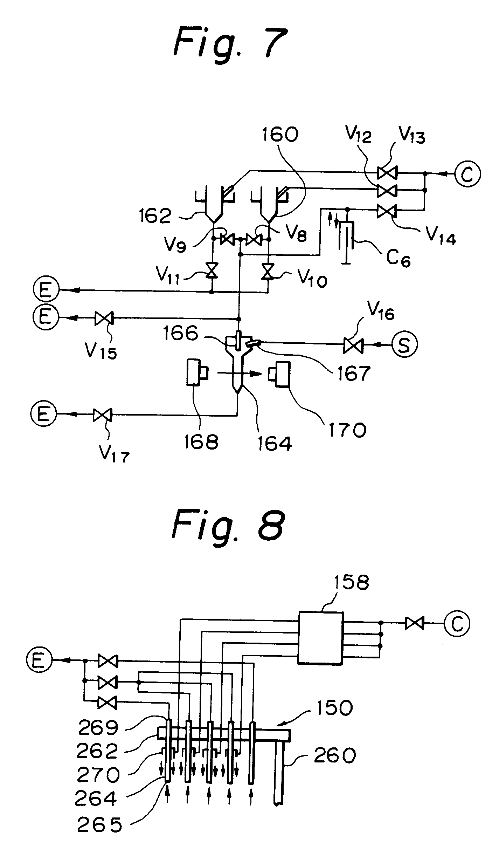

The flow of operation of this immunoagglutination measurement apparatus will now be described with reference to Fig. 1 and Figs. 6 through 8. Figs. 6 through 8 are schematic views of hydraulic circuitry peripheral to the sampling and dispensing devices 100, 140, 142, 144, 146 (Fig. 6), the detecting section 164 (Fig. 7) and the cleansing device 150 (Fig. 8).

When the sampling and dispensing device 100 operates to bring the pipette 102 into contact with the surface of the buffer solution in a buffer solution vessels at a predetermined position of the buffer solution table 50, the descent of the pipette 102 is halted by detection of the liquid level and a fixed amount, e.g., 80 »l, of the buffer solution is drawn up from the pipette 102 by lowering a piston of a syringe C1 connected to the pipette. At this time a valve V1 is in the closed state. Next, the sampling and dispensing device 100 is raised, rotated and lowered to dispose the pipette 102 in a reaction vessel at a predetermined position of the reaction table, whereupon the piston of cylinder C1 is raised to dispense the buffer solution taken up earlier. If it is arranged so that the tip of the pipette will contact the surface of the liquid at the end of the dispensing operation, none of the solution will remain attached to the tip. This will improve dispensing accuracy. Thereafter, the sampling and dispensing device 100 is raised, rotated and lowered to dispose the pipette 102 in a cleansing tank 101. The valve V1 is opened, a cleaning fluid is supplied from a cleaning fluid source, and the fluid is discharged from the tip of the pipette 102 to cleanse the inner wall of the pipette. By opening a valve V2, the cleaning fluid is sprayed from the central portion of the cleansing tank 101 so as to strike the outer wall of the pipette 102. As a result, the fluid flows over the outer wall and cleanses the same. The valve V1 is then closed. By opening a valve V3, air is expelled from the upper portion of the cleansing tank so as to impinge upon the pipette 102, thereby blowing off any cleaning fluid clinging to the outer wall and tip of the pipette 102. A valve V4 is opened during cleansing so that the cleaning fluid is recovered in a waste liquid recovery section. If the piston of syringe C1 is lowered further by a very small amount, an air layer can be formed in the tip of the pipette 102. This will make it possible to carry out sampling and dispensing in a state where the buffer solution is isolated from the cleaning fluid.

When the buffer solution has been dispensed into the reaction vessel 12 at the predetermined position by the sampling and dispensing device 100, the reaction table 10 is rotated counter-clockwise by an amount equivalent to nine reaction vessels without waiting for the above-mentioned process for cleansing the sampling and dispensing device 100. A fixed amount, e.g, 10 »l, of a specimen taken up beforehand by the sampling and dispensing device 140 from a specimen vessel 140 at a predetermined position of the rack is dispensed by the device 140 into the reaction vessel 12 into which the buffer solution has previously been dispensed, thereby mixing the specimen and the buffer solution. The sampling and dispensing operation of the sampling and dispensing device 140 uses a syringe C2 and is similar to that of the sampling and dispensing device 100. Cleansing is also performed in a similar manner using a cleansing tank 141. The reaction table 10 is rotated clockwise by an amount equivalent to ten reaction vessels without waiting for the cleansing of the sampling and dispensing device 140. Thus, buffer solutions and specimens are successively mixed together one after in new reaction vessels efficiently and without waiting time while the reaction table 10 is repeatedly rotated back and fourth. By repeatedly rotating the reaction table 10 through nine reaction vessels in the counter-clockwise direction and ten reaction vessels in the clockwise direction, as described above, the net effect is to advance the reaction table 10 clockwise one reaction vessel 12 at a time.

Next, a fixed amount, e.g., 10 »l, of a reagent is taken up by the sampling and dispensing device 142 from a reagent vessel 92 at a predetermined position of the reagent table 90 and is dispensed by the device 92 into the reaction vessel 12, in which the buffer solution and specimen have been mixed, at a predetermined position, thereby mixing the reagent with the buffer solution and specimen. The sampling and dispensing operation of the sampling and dispensing device 142 uses a syringe C3 and is similar to that of the sampling and dispensing device 100. Cleansing is also performed in a similar manner using a cleansing tank 143. It should be noted that if the reaction table 10 is shaken and agitated at the same time that the specimen and reagent are dispensed into the reaction vessel 12 with the pipettes of the sampling and dispensing devices 140, 142 in contact with or submerged below the surface of the liquid in the reaction vessel 12 when the specimen and reagent are each dispensed, the precision of the dispensing operation is improved and mixing is facilitated.

The reaction vessels 12 are held at a temperature of 43 - 47°C, as mentioned earlier. Since the reaction table 10 is shaken and agitated by constant rotation at times other than when it is being rotated clockwise or counter-clockwise, the reaction solution comprising the buffer solution, specimen and reagent in the reaction vessels 12 is agitated uniformly with the passage of time and without variance from one reaction vessel to the next even when the amount of the reaction solution is very small, e.g., 100 »l. This stabilizes and promotes the latex agglutination reaction caused by the antigen-antibody response. Since a rotor is not used in the reaction vessels, rotor wear is not a problem. This assures stable shaking and agitation over an extended period of time. The larger the rotational diameter and speed of agitation of the reaction table 10, the greater the agitating force obtained. However, too large an agitating force can have the adverse effect of impeding the progress of the latex agglutination reaction. Accordingly, if, by way of example, the inner diameter of the reaction vessel 12 is 8 mm and the amount of reaction solution is 100 »l, a rotational diameter and speed of agitation of the reaction table 10 of 2 -5 mm and 400 - 1000 rpm, respectively, will be appropriate. Ordinarily, the preferred values are 3 mm and 600 rpm, respectively.

The sampling and dispensing devices 144, 146 are for performing a first measurement (T1 measurement) and a second measurement (T2 measurement), respectively, with regard to a certain reaction solution. The pipettes of these devices are cleansed by respective cleansing tanks 145, 147. Connected to the pipettes of the sampling and dispensing devices 144, 146 are a pipette selection valve V5 for carrying out sampling and dispensing, a syringe C4 for sampling and dispensing the reaction solution, a valve V6 for changing over a diluting solution flow path, a check valve V7 and a diluting solution dispensing syringe C5. When the valve V6 is switched over to a diluting solution supply source and the piston of syringe C5 is lowered, a fixed amount of the diluting solution is taken up in the syringe C5. When the valve V6 is switched over to the pipette side and the piston of the syringe C5 is raised, a fixed amount of the diluting solution is dispensed from either of the pipettes. When the valve V5 is switched over to either of the pipettes and the piston of syringe C4 is lowered or raised, the reaction solution can be sampled by or dispensed from the selected pipette. If the diluting solution is also dispensed at the same time as the reaction solution, the reaction solution will be diluted. The valve V7 acts to mitigate pressure shock produced when the valve V6 is changed over.

With the sampling and dispensing device 144 switched over, a fixed amount, e.g., 30 »l, of the reaction solution is taken up by the device 144 from a reaction vessel 12 at a predetermined position of the reaction table 10, and a prescribed time, e.g., 24 seconds, after mixing the reaction solution is dispensed into the sample chamber 160 together with 1 ml of the diluting solution. It should be noted that since only 0.5 ml of the diluting solution will have been previously dispensed into the sample chamber 160 by the syringe C5, the 30 »l of reaction solution will be embraced by 0.5 ml and 1 ml of diluting solution and therefore will be effectively diluted by 51 times within the sample chamber 160. As seen from the specimen, this represents dilution by 510 times. The resulting diluted sample is for the T1 measurement.

As for the remaining 70 »l of reaction solution, the valve V5 is switched over and prescribed time, e.g., 14 minutes and 36 seconds, after mixing, the reaction solution is dispensed into the sample chamber 162 together with the diluting solution to dilute the reaction solution by 51 times. Thus is prepared a dilute sample of the reaction solution for the T2 measurement. It should be noted that dilution can be performed by using a sheathing solution rather than a diluting solution.

Fig. 7 is a schematic view of hydraulic circuitry peripheral to a flowcell 164 serving as a detector for detecting the latex agglutinate. Opening valves V8, V15 fills a flow passage with 1530 »l of the diluted sample for T1 measurement prepared in the sample chamber 160 by the sampling and dispensing device 144. The valves V8, V15 are subsequently closed, followed by opening a valve V17. Raising the piston of syringe C6 at a prescribed speed causes the diluted sample to be expelled from a nozzle 166 at a fixed flow velocity. When a valve V16 is opened at this time, a sheathing solution is supplied at a fixed pressure from a supply port 167 at the upper side surface of the flowcell. The diluted sample flows through the center of the flowcell 164 in the form of a fine stream enveloped by the sheathing solution. The stream of the sample is irradiated with light in the form of a spot and light scattered from individual particles is optically detected.

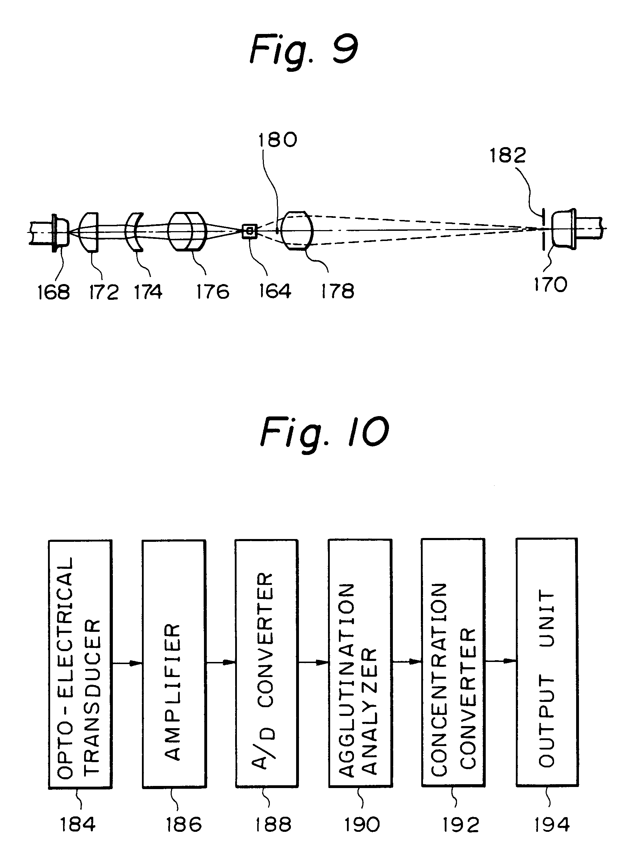

Fig. 9 is a plan view of the optical detecting device. Laser light generated by a light-emitting element 168 and having a wavelength of, e.g., 780 nm, is condensed by lenses 172, 174, 176 to form a spot of light on the central portion of the flowcell 164. Transmission of the scattered light from the flowcell is blocked by a light-shielding plate 180 and only forward-scattered light is condensed by a lens 178 to irradiate a light-receiving element 170, whereby the light is converted into an electric signal. Stray light is blocked by a light-shielding plate 182 to improve the forward-scattered light detection sensitivity.

During the detection of the particles within the flowcell 164, the syringe C6 expels the diluted sample from the nozzle 166. Since the valves V16, V17 are open and the valve V8 is closed while this is being carried out, the sample chamber 160 is cleansed while making effective use of time. The diluted sample remaining in the sample chamber 160 is discharged by opening a valve V10. A cleaning fluid, which is supplied from the upper portion of the sample chamber 160 by opening a valve V12, cleanses the inner wall of the chamber before being discharged. The cleaning fluid is supplied again, some of the fluid passing through the valve V10 to cleanse the same before being discharged. When the syringe C6 has expelled a predetermined amount of the diluted sample, operation of the syringe C6 is halted and only the sheathing solution is supplied from the supply port 167 and passes through the valve V17 to be discharged. As a result, the interior of the flowcell 164 is cleansed, after which the valves V16, V17 are closed. Opening the valves V8, V15 discharges the cleaning fluid from the sample chamber 160 so that the fluid may flow through and cleanse the flow passageway previously filled with the sample for measurement. Next, the valve V8 is closed and the valve V10 is opened to completely discharge the cleaning fluid from within the sample chamber 160. Valve V14 is also opened to permit further cleaning. Next, the valves V15, V16 are opened to supply the sheathing solution to the supply port 167, the solution being discharged by flowing backwardly through the nozzle 166. The nozzle 166 is thus cleansed. In Fig. 7, it is possible to perform cleansing by using the sheathing solution instead of the cleaning fluid.

The diluted sample for the T2 measurement is prepared in the sample chamber 162 by the sampling and dispensing device 146 in a manner similar to that described above. Valves V9, V11 function instead of the valves V8, V10 to carry out measurement and cleansing in a manner similar to the foregoing.

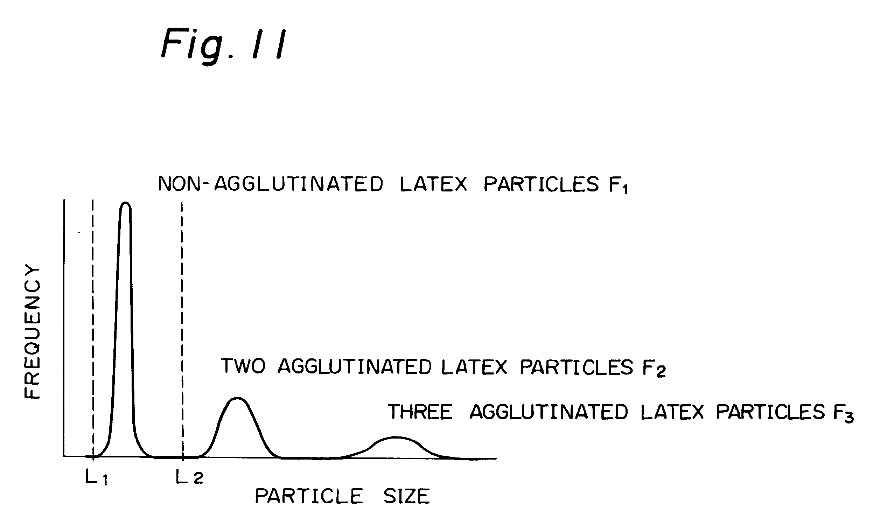

Fig. 10 is a schematic view of a measurement circuit which includes an opto-electrical transducer 184. The transducer 184, which has a light-receiving element 170 and is capable of a high-speed response, is described in, e.g., the specification of Japanese Utility Model Application No. 62-197153. The transducer 184 produces an electric signal the magnitude whereof corresponds to the size of detected particles. Using such a high-speed opto-electrical transducer makes it possible shorten measurement time by allowing the particles to be passed through the flowcell 164 faster than in the prior art. The output signal of the transducer 184 representing detected particles is amplified by an amplifier 186, and the amplified signal is subjected to an A/D conversion by an A/D converter 188. As a result, crest values indicative of individual particles are obtained in the form of digital values. This digital data is stored in memory and the particles represented thereby are counted. This is followed by displaying a distribution of the particle sizes, as shown in Fig. 11. The output of the A/D converter 188 is applied to analyzing means 190, in which there are set, by way of example, a level L1 for distinguishing between noise and non-agglutinated latex particles F1, and a level L2 for distinguishing between non-agglutinated particles F1 and two agglutinated latex particles F2. By setting these levels, it is possible to calculate the number of particles whose sizes are greater than the level L1 (which number is the sum of the number M of non-agglutinated latex particles and the number P of agglutinated latex particles) and the number of particles whose sizes are greater than the level L2 (the number P of agglutinated latex particles). Agglutination degree Y can then be obtained as a numerical value using the formula Y = P/(M+P). In order to obtain the agglutination degree Y as a numerical value, Y can be defined by another method which does not rely upon this formula, and Y can then be converted into a numerical value in accordance with this definition. Methods of accomplishing this are described in the specifications of, e.g., Japanese Patent Application Laid-Open Nos. 60-111963 and 60-243565. The agglutination degree Y obtained by the analyzing means 190 is converted into concentration by concentration converting means 192, the output of which is delivered to an output unit 194.

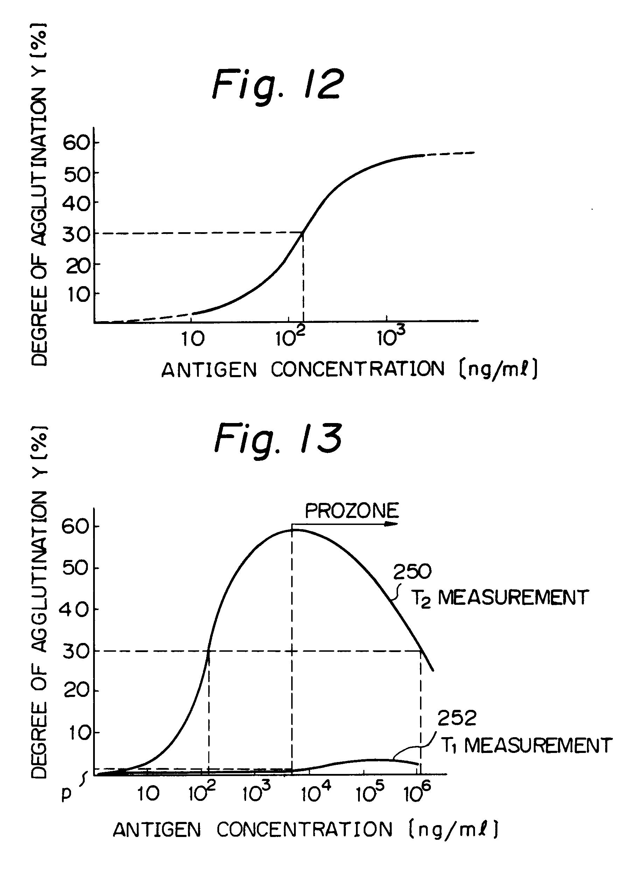

Fig. 12 is an example of a calibration curve showing the relation between concentration and the agglutination degree Y at such time using a known concentration calibrator. Concentration can be found from the degree of agglutination by applying the value of Y obtained in the T2 measurement to the calibration curve of Fig. 12. However, in a so-called excessive region (prozone) in which the concentration of a prescribed antigen contained in a specimen is too high, there is a tendency for the latex agglutination reaction to be suppressed. Fig. 13 shows concentration - agglutination curves illustrating this suppression phenomenon, in which numerals 250, 252 denote concentration - agglutination curves at T2 measurement and T1 measurement, respectively. As indicated by the concentration - agglutination curve 250 for T2 measurement, the degree of agglutination rises when the antigen concentration increases in the low-concentration region, whereas the degree of agglutination becomes smaller the higher the antigen concentration becomes in the prozone. Accordingly, the antigen concentration cannot be uniquely determined from the value of the degree of agglutination. This means that it is necessary to confirm, for each and every specimen, that the degree of agglutination obtained in the T2 measurement is not a degree of agglutination obtained in the prozone. To this end, for example, it is useful to consider a case in which T1 measurement is carried out at a suitable time prior to T2 measurement and the value of the degree of agglutination thus obtained rises when the antigen concentration rises. In other words, the value of the degree of agglutination (curve 252) in the T1 measurement is compared with the degree of agglutination p in the T1 measurement corresponding to the lower limit concentration of the prozone, in which p serves as a criterion. If p is exceeded, this means that the degree of agglutination is in the prozone.

Thus, the sample prepared by the sampling and dispensing device 144 is used in a first measurement (T1 measurement), the sample prepared by the sampling and dispensing device 146 is used in a second measurement (T2 measurement), and it is judged whether the degree of agglutination is inside or outside the prozone.

The reaction vessel 12 containing unnecessary reaction solution at the end of a measurement arrives at the cleansing device 150, which has five pipettes. Fig. 8 is a schematic view of hydraulic circuitry peripheral to the cleansing device 150. When a shaft 260 is lowered, the five pipettes descend simultaneously and can be brought into contact with the bottom of the reaction vessel 12. The reaction solution is drawn up by each pipette from the intake port 265 provided with the notch 267 and is discharged into a waste recovery section from the discharge port 269. The cleaning fluid is supplied to the cleansing section 270 from a pump 158 and is discharged from the outer periphery of each pipette, thereby cleansing the outer walls of the pipettes and the inner walls of the reaction vessels. The cleaning fluid is again drawn up and discharged by the pipettes. By repeating this, two cleansing operations are performed per pipette. The shaft 260 and the five pipettes 264 are then raised and the reaction table 10 is rotated. The same cleansing operation is carried out each time the reaction vessels 12 are indexed by one vessel in the clockwise direction. Thus, each single reaction vessel is successively cleansed by four pipettes, for a total of eight cleansing operations, as a result of which all of the reaction solution is completely removed from the reaction vessel. Since the fifth pipette is not provided with the cleansing section 270, this pipette merely performs a sucking operation and is not supplied with the cleaning fluid. The end result is that all of the liquid in the reaction vessel 12 is eventually removed. In accordance with the present invention, a rotor used in the prior art is not employed in the reaction vessel 12. This facilitates cleansing of the reaction vessel and solves the problem of cleaning fluid left attached to the rotor. As a result, there is no adverse effect upon the measurement of the next specimen. In addition, it is possible to perform a variety of highly precise measurements relating to the antigen-antibody reaction by virtue of the reaction promoting effect and long-term stability of the reaction state brought about by the aforementioned shaking and agitating motion.

Furthermore, in accordance with the invention, the quantity of one substance in a specimen can be measured by a single measurement. However, since the buffer solution table 50 and reagent table 90 can each have a plurality of vessels mounted thereof, a plurality of buffer solution vessels 52 and a plurality of reagent vessels 92 can be provided in accordance with the types of substances to be measured, and items for measurement can be preset. If this is done, measurement results for a plurality of substances or a number of items can be obtained at all times. Examples of antigen capable of being measured include α-fetprotein (AFP), carcinoembryonic antigen (CEA), ferritin (FRN) and β₂-microglobulin (β₂-m). It has been clarified that linearity of measurement is maintained in the concentration ranges of 2 - 1,000 ng/mℓ for AFP, 1 - 250 ng/mℓ for CEA, 2 - 1,000 ng/mℓ for FRN and 255 - 10,200 ng/mℓ for β₂-m.

Whereas the sampling and dispensing device in the prior art is for multi-purpose use, namely for the buffer solution, specimen T1 measurement and T2 measurement, the sampling and dispensing devices in the apparatus of the present invention are completely independent of one another. Since this makes it possible to eliminate the waiting time which arises in the prior art as at the time of cleansing, the various operations performed by the sampling and dispensing devices can be carried out while overlapping one another in terms of time. As a result, specimen processing capability per unit time is greatly improved, as evidenced by the fact that the immunoagglutination measurement apparatus is capable of processing as many as 150 specimens per hour.

As described above, the immunoagglutination measurement apparatus of the invention has the following outstanding advantages:
(a) Since the stirring to promote and stabilize the antigen-antibody reaction is performed by agitation produced by shaking, a stable agglutination reaction is promoted even with half the amount of reaction solution used in the prior art, and agitation is performed uniformly without variance from one reaction vessel to another. This makes it possible to reduce the required amount of buffer solution, specimen and reagent each by half.
(b) Since a rotor is not used to stir the reaction solution, there is no longer any risk of rotor or vessel wear, uniform stirring of the entire contents of the reaction vessel can be assured and it is possible to achieve accurate measurement and excellent reproducibility. In addition, the reaction vessels can be completely cleansed and stable measurement results can be obtained with greater sensitivity.
(c) Since the sampling and dispensing devices for the buffer solution, specimen, reagent and reaction solution are used exclusively for these materials and operate independently of one another, the various sampling and dispensing operations can be executed very efficiently with little waiting time. The result is a major improvement in specimen processing capability.
(d) Measurement can be performed in a successive manner merely by mounting the specimen vessels on racks and arranging the racks in side-by-side fashion in the dispatch section. This facilitates the handling of the specimen vessels.

As many apparently widely different embodiments of the present invention can be made without departing from the scope thereof, it is to be understood that the invention is not limited to the specific embodiments thereof except as defined in the dependent claims.

## Claims

1. An immunoagglutination measurement apparatus for mixing together a specimen, which contains an antigen or antibody to be measured, and a reagent containing insoluble carriers to which is bonded an antibody or antigen that specifically reacts with the antigen or antibody in the specimen, whereby an antigen-antibody reaction takes place that causes the insoluble carriers to mutually agglutinate through the medium of the antigen or antibody in the specimen, introducing the agglutinate to a detecting section whereby a signal based on electrical differences or optical differences among particles is generated, and measuring this signal by particle counting means to obtain the degree of agglutination of the insoluble carriers as a numerical value followed by converting the numerical value, thereby measuring the amount of antigen or antibody contained in the specimen, said apparatus comprising:
a base plate (38);
a reversibly rotatable buffer solution table (50) for carrying a plurality of buffer solution vessels (52) maintained in an isothermal state;
a reversibly rotatable reagent table (90) for carrying a plurality of reagent vessels (92) in an isothermal state;
a reversibly rotatable and shakable reaction table (10) for carrying a plurality of reaction vessels (12) maintained in an isothermal state, the reaction table being itself carried on the base plate;
a first shaft (14) for rotating said reaction table (10);
a retainer (30) which freely rotatably supports said first shaft (14);
a second shaft (34) which freely supports said retainer (14);
a third shaft (32) through which the retainer is eccentrically coupled to said second shaft (34) so that, when the second shaft (34) rotates, the retainer is shaken relative to the base plate (38), thereby shaking the reaction table (10) relative to the base plate (38);
a balancer (36) being attached to said third shaft (32) for cancelling vibration, produced by movement of the center of gravity, generated when the reaction table (10) and retainer (30) shake;
a transfer section (210) for transferring racks (200) on which specimen vessels (202) are mounted;
a dispatch section (204) connected to said transfer section (210);
a recovery section (234) connected to said transfer section (210) for recovering the racks (200) from said transfer section (210);
first sampling and dispensing means (100) for sampling a buffer solution from the buffer solution vessels (52) and dispensing the buffer solution into the reaction vessels (12);
second sampling and dispensing means (140) for sampling a specimen from the specimen vessels (202) and dispensing the specimen into the reaction vessels (12);
third sampling and dispensing means (142) for
sampling a reagent from the reagent vessels (92) and dispensing the reagent into the reaction vessels (12);
fourth sampling and dispensing means (144, 146) for sampling a reaction solution, in which an agglutination reaction of the insoluble carriers is brought about by mixing of the buffer solution, specimen and reagent, from the reaction vessels (12) and dispensing the reaction solution into a sample chamber (160, 162) communicating with a detecting section (164);
cleansing means (150) for discharging reaction solution remaining in the reaction vessels (12) and cleansing the reaction vessels (12)
particle counting means to determine as a numerical value a degree of agglutination of said insoluble carriers.

2. The apparatus according to claim 1, further comprising:
a first driving source (17) connected to said first shaft (14);
a second driving source (42) coupled to said third shaft (32);
an isothermal section (20) provided with a groove (22) so as to surround the reaction vessels (12) and having temperature-controllable elements (26) attached thereto in close proximity to one another; and
a thermal insulating material provided so as to cover a periphery of said isothermal section (20);
said reaction table (10) being reversibly rotatable and shakable while the reaction vessels (12) are maintained in an isothermal state.

3. The apparatus according to Claim 1 or 2, wherein each of said first, second, third and fourth sampling and dispensing means (100;140;142;144,146) comprises:
a fourth shaft (116) freely rotatably and slidably supported on second and third retainers (118;122);
a first arm (112) attached to said fourth shaft (116);
a fourth retainer (104) having one end rotatably supported on said first arm (112);
a first spring (108) for applying a force to said fourth retainer (104) to rotate the same;
a first pipette (102) attached to said fourth retainer (104);
a syringe connected to said first pipette (102);
a sensor (114) for detecting that said fourth retainer (104) has been rotated against the force applied by said first spring (108);
first and second rotating members (124;126) rotatably attached with respect to said fourth shaft (116);
a first connector (128) for connecting said first and second rotating members (124;126);
a third driving source (138) connected to said first and second rotating members (124;126);
a guide (130) attached to said fourth shaft (116) for limiting motion of said first connector (128);
a second connector (132) provided on said fourth shaft (116) so as to be fixed axially of said fourth shaft (116) and rotatable about said fourth shaft (116); and
a fourth driving source (136) for linearly reciprocating said second connector (132) axially of said fourth shaft (116);
a grounded surface being provided below a vessel to undergo sampling or dispensing by said first pipette (102), and a liquid level of said vessel being sensed by sensing a change in impedence between said first pipette (102) and the grounded surface when said first pipette (102) is and is not in contact with a surface of the liquid in said vessel.

4. The apparatus according to any one of Claims 1 through 3, wherein said cleansing means (150) comprises:
a fifth shaft (260) linearly reciprocatable in the axial direction;
a fifth driving source for driving said fifth shaft (260);
a second arm (262) attached to said fifth shaft (260);
a fifth retainer (276,278) attached to said second arm (262);
a second pipette (264) supported by said fifth retainer (276,278) so as to be movable therethrough, said second pipette (264) having a tip (265) provided with a notch (267);
a second spring (280) provided within said fifth retainer (276,278) and compressed between said fifth retainer (276,278) and a projection (268) provided on said second pipette (264); and
a cleansing part (270) attached to said second pipette (264) and forming a gap (272) between itself and an outer periphery of said second pipette (264), said cleansing part (270) having a supply port (274) communicating with said gap (272).

## Patentansprüche

1. Immunoagglutinations-Meßvorrichtung, um eine Probe, die ein zu messendes Antigen oder einen zu messenden Antikörper enthält, und ein Reagens, das unlösliche Trägersubstanzen enthält, an die ein Antikörper oder ein Antigen gebunden ist, welches mit dem Antigen oder Antikörper in der Probe spezifisch reagiert, miteinander zu mischen, wodurch eine Antigen-Antikörper-Reaktion stattfindet, die bewirkt, daß die unlöslichen Trägersubstanzen durch das Antigen oder den Antikörper in der Probe agglutinieren, das Agglutinat einem Nachweisglied zuzuführen, wodurch auf der Grundlage elektrischer Unterschiede oder optischer Unterschiede zwischen Partikeln ein Signal erzeugt wird, und dieses Signal mittels einer Partikelzähleinrichtung zu messen, um den Agglutinationsgrad der unlöslichen Trägersubstanzen als numerischen Wert zu erhalten, gefolgt von einem Umformen des numerischen Wertes, wodurch die in der Probe enthaltene Antigen- oder Antikörpermenge gemessen wird, wobei die besagte Vorrichtung umfaßt:
eine Grundplatte (38);
einen mit umkehrbarer Drehrichtung drehbaren Pufferlösungstisch (50) zum Aufnehmen einer Mehrzahl von Pufferlösungsgefäßen (52), die in einem isothermischen Zustand gehalten werden;
einen mit umkehrbarer Drehrichtung drehbaren Reagenstisch (90) zum Aufnehmen einer Mehrzahl von Reagensgefäßen (93) in einem isothermischen Zustand;
einen mit umkehrbarer Drehrichtung drehbaren und schüttelbaren Reaktionstisch (10) zum Aufnehmen einer Mehrzahl von Reaktionsgefäßen (12), die in einem isothermischen Zustand gehalten werden, wobei der Reaktionstisch selbst auf der Grundplatte getragen wird;
eine erste Welle (14), um den besagten Reaktionstisch (10) zu drehen;
eine Halterung (30), welche die besagte erste Welle (14) frei drehbar hält;
eine zweite Welle (34), welche die besagte Halterung (14) frei hält;
eine dritte Welle (32), durch welche die Halterung exzentrisch mit der besagten zweiten Welle (34) gekoppelt ist, so daß die Halterung relativ zur Grundplatte (38) geschüttelt wird, wenn sich die zweite Welle (34) dreht, wodurch der Reaktionstisch (10) relativ zur Grundplatte (38) geschüttelt wird;
einen an der besagten dritten Welle (32) angebrachten Stabilisator (36) zum Tilgen von Schwingungen, die durch eine Bewegung des Schwerpunktes hervorgerufen werden, welche erzeugt wird, wenn der Reaktionstisch (10) und die Halterung (30) eine Schüttelbewegung durchführen;
ein Überführungsglied (210), um Ständer (200) zu überführen, auf denen Probengefäße (202) angebracht sind;
ein mit dem besagten Überführungsglied (210) verbundenes Abfertigungsglied (204);
ein mit dem besagten Überführungsglied (210) verbundenes Rückholglied (234), um die Ständer (200) von dem besagten Überführungsglied (210) zurückzuholen;
eine erste Substanzprobenahme- und Verteilungseinrichtung (100), um eine Substanzprobe einer Pufferlösung aus den Pufferlösungsgefäßen (52) zu entnehmen, und die Pufferlösung in die Reaktionsgefäße (12) abzugeben;
eine zweite Substanzprobenahme- und Verteilungseinrichtung (140), um eine Substanzprobe einer Probe aus den Probengefäßen (202) zu entnehmen, und die Probe in die Reaktionsgefäße (12) abzugeben;
eine dritte Substanzprobenahme- und Verteilungseinrichtung (142), um eine Substanzprobe eines Reagens aus den Reagensgefäßen (92) zu entnehmen, und das Reagens in die Reaktionsgefäße (12) abzugeben;
eine vierte Substanzprobenahme- und Verteilungseinrichtung (144, 146), um eine Substanzprobe einer Reaktionslösung, in der durch Mischen der Pufferlösung, der Probe und des Reagens eine Agglutinationsreaktion der unlöslichen Trägersubstanzen herbeigeführt wird, aus den Reaktionsgefäßen (12) zu entnehmen, und die Reaktionslösung in eine mit einem Nachweisglied (164) verbundene Substanzprobekammer (160, 162) abzugeben;
eine Reinigungseinrichtung (150), um in den Reaktionsgefäßen (12) verbleibende Reaktionslösung abzuführen und die Reaktionsgefäße (12) zu reinigen;
eine Partikelzähleinrichtung, um einen Agglutinationsgrad der besagten unlöslichen Trägersubstanzen als numerischen Wert zu bestimmen.

2. Vorrichtung nach Anspruch 1, dadurch gekennzeichnet, daß sie weiter umfaßt:
eine erste Antriebsquelle (17), die mit der besagten ersten Welle (14) verbunden ist;
eine zweite Antriebsquelle (42), die mit der besagten dritten Welle (32) gekoppelt ist;
ein Isothermikglied (20), welches mit einer Nut (22) versehen ist, so daß es die Reaktionsgefäße (21) umgibt, und welches temperatursteuerbare Elemente (26) aufweist, die in enger Nachbarschaft voneinander daran angebracht sind; und
ein Wärmeisoliermaterial, das so vorgesehen ist, daß es einen Umfang des besagten Isothermikgliedes (20) überzieht;
wobei der besagte Reaktionstisch (10) mit umkehrbarer Drehrichtung drehbar und schüttelbar ist, während die Reaktionsgefäße (12) in einem isothermischen Zustand gehalten werden.

3. Vorrichtung nach Anspruch 1 oder 2, dadurch gekennzeichnet, daß jede der besagten ersten, zweiten, dritten und vierten Substanzprobenahme- und Verteilungseinrichtung (100;140;142;144,146) umfaßt:
eine auf einer zweiten und dritten Halterung (118;122) frei drehbar und verschiebbar gehaltene vierte Welle (116);
einen an der besagten vierten Welle (116) angebrachten ersten Arm (112);
eine vierte Halterung (104) mit einem drehbar auf dem besagten ersten Arm (112) gehaltenen Ende;
eine erste Feder (108), um eine Kraft auf die besagte vierte Halterung (104) aufzubringen, um dieselbe zu drehen;
eine an der besagten vierten Halterung (104) angebrachte erste Pipette (102);
eine mit der besagten ersten Pipette (102) verbundene Spritze;
einen Sensor (114), um zu erfassen, daß die besagte vierte Halterung (104) entgegen der von der besagten ersten Feder (108) aufgebrachten Kraft gedreht worden ist;
ein bezüglich der besagten vierten Welle (116) drehbar angebrachtes erstes und zweites Drehelement (124;126);
einen ersten Verbinder (128), um das besagte erste und zweite Drehelement (124;126) zu verbinden;
eine dritte Antriebsquelle (138), die mit dem besagten ersten und zweiten Drehelement (124;126) verbunden ist;
eine an der besagten vierten Welle (116) angebrachte Führung (130), um eine Bewegung des besagten ersten Verbinders (128) zu begrenzen;
einen zweiten Verbinder (132), der so auf der besagten vierten Welle (116) vorgesehen ist, daß er in axialer Richtung der besagten vierten Welle (116) feststehend und um die besagte vierte Welle (116) drehbar ist; und
eine vierte Antriebsquelle (136), um den besagten zweiten Verbinder (132) in axialer Richtung der besagten vierten Welle (116) geradlinig hin- und herzubewegen;
wobei unter einem Gefäß, das einer Probenahme oder Abgabe durch die besagte erste Pipette (102) unterzogen werden soll, eine geerdete Oberfläche vorgesehen ist, und wobei ein Flüssigkeitspegel des besagten Gefäßes durch Wahrnehmung einer Impedanzänderung zwischen der besagten ersten Pipette (102) und der geerdeten Oberfläche ermittelt wird, wenn sich die besagte erste Pipette (102) mit einer Oberfläche der Flüssigkeit in dem besagten Gefäß in Berührung und nicht in Berührung befindet.

4. Vorrichtung nach einem beliebigen der Ansprüche 1 bis 3, dadurch gekennzeichnet, daß die besagte Reinigungseinrichtung (150) umfaßt:
eine in axialer Richtung geradlinig hin- und herbewegbare fünfte Welle (260);
eine fünfte Antriebsquelle, um die besagte fünfte Welle (260) anzutreiben;
einen an der besagten fünften Welle (260) angebrachten zweiten Arm (262);
eine an dem besagten zweiten Arm (262) angebrachte fünfte Halterung (276,278);
eine zweite Pipette (264), die von der besagten fünften Halterung (276,278) so gehalten wird, daß sie durch diese hindurch beweglich ist, wobei die besagte zweite Pipette (264) eine mit einer Kerbe (267) versehene Spitze (265) aufweist;
eine zweite Feder (280), die innerhalb der besagten fünften Halterung (276,278) vorgesehen und zwischen der besagten fünften Halterung (276, 278) und einem auf der besagten zweiten Pipette (264) vorgesehenen Ansatz (268) zusammengedrückt ist; und
ein Reinigungsteil (270), das an der besagten zweiten Pipette (264) angebracht ist und einen Zwischenraum (272) zwischen sich und einem äußeren Umfang der besagten zweiten Pipette (264) bildet, wobei das besagte Reinigungsteil (270) eine mit dem besagten Zwischenraum (272) verbundene Zufuhröffnung (274) aufweist.

## Revendications

1. Appareil de mesure par immunoagglutination, destiné au mélange d'un échantillon, qui contient un antigène ou un anticorps à mesurer, et de réactif contenant des supports insolubles et auxquels est lié un anticorps ou un antigène qui réagit spécifiquement avec l'antigène ou l'anticorps de l'échantillon, si bien que la réaction antigène-anticorps se produit et provoque une agglutination mutuelle des supports insolubles par l'intermédiaire de l'antigène ou de l'anticorps présent dans l'échantillon, à l'introduction de l'agrégat dans une section de détection si bien qu'un signal qui dépend des différences électriques ou optiques entre les particules est formé, et à la mesure de ce signal par un moyen de comptage de particules qui donne le degré d'agglutination des supports insolubles sous forme d'une valeur numérique avant conversion de la valeur numérique, si bien que la quantité d'antigène ou d'anticorps contenu dans l'échantillon est mesurée, l'appareil comprenant :
une plaque de base (38),
une table (50) de solutions tampons qui peut tourner de manière réversible, destinée à transporter plusieurs récipients (52) de solution tampon maintenus à un état isotherme,
une table (90) de réactifs qui peut tourner de manière réversible et qui est destinée à transporter plusieurs récipients (92) de réactif à un état isotherme, une table (10) de réaction qui peut être secouée et qui peut tourner de manière réversible afin qu'elle transporte plusieurs récipients (12) de réaction maintenus à un état isotherme, la table de réaction étant elle-même supportée par la plaque de base,
un premier arbre (14) destiné à faire tourner la table de réaction (10),
un organe (30) de retenue qui supporte librement en rotation le premier arbre (14),
un second arbre (34) qui supporte librement l'organe de retenue (14),
un troisième arbre (32) par l'intermédiaire duquel l'organe de retenue est couplé excentriquement au second arbre (34) de manière que, lorsque le second arbre (34) tourne, l'organe de retenue soit secoué par rapport à la plaque de base (38) si bien que la table de réaction (10) est secouée par rapport à la plaque de base (38),
un organe (36) d'équilibrage fixé au troisième arbre (32) afin qu'il compense les vibrations produites par le déplacement du centre de gravité, lorsque la table (10) de réaction et l'organe (30) de retenue sont secoués,
une section (210) de transfert de râteliers (200) sur lesquels sont montés les récipients (202) d'échantillon,
une section (204) d'acheminement raccordée à la section de transfert (210),
une section de récupération (234) raccordée à la section de transfert (210) pour la récupération des râteliers (200), de la section de transfert (210),
un premier moyen (100) d'échantillonnage et de distribution destiné à échantillonner une solution tampon des récipients (52) de solution tampon et à distribuer la solution tampon dans les récipients (12) de réaction,
un second moyen (140) d'échantillonnage et de distribution destiné à échantillonner un échantillon des récipients (202) d'échantillon et à distribuer l'échantillon dans les récipients de réaction (12),
un troisième moyen (142) d'échantillonnage et de distribution destiné à échantillonner un réactif des récipients (92) de réactif et à distribuer le réactif dans les récipients (12) de réaction,
un quatrième moyen (144, 146) d'échantillonnage et de distribution destiné à échantillonner une solution de réaction, dans lequel une réaction d'agglutination des véhicules insolubles est réalisée par mélange de la solution tampon, de l'échantillon et du réactif, à partir des récipients de réaction (12), et à distribuer la solution de réaction dans une chambre (160, 162) d'échantillon qui communique avec une section de détection (164),
un moyen de nettoyage (150) destiné à évacuer la solution de réaction restant dans les récipients de réaction (12) et à nettoyer les récipients de réaction (12), et
un moyen de comptage de particules destiné à déterminer, sous forme d'une valeur numérique, un degré d'agglutination des véhicules insolubles.

2. Appareil selon la revendication 1, comprenant en outre :
une première source d'entraînement (17) raccordée au premier arbre (14),
une seconde source d'entraînement (42) couplée au troisième arbre (32),
une section isotherme (20) ayant une gorge (22) destinée à entourer les récipients de réaction (12) et ayant des éléments (26) dont la température est réglable et qui lui sont fixés très près les uns des autres, et
une matière d'isolation thermique disposée afin qu'elle recouvre la périphérie de la section isotherme (20),
la table de réaction (10) pouvant être secouée et entraînée en rotation de manière réversible alors que les récipients (12) de réaction sont maintenus à un état isotherme.

3. Appareil selon la revendication 1 ou 2, dans lequel chacun des premier, second, troisième et quatrième moyens d'échantillonnage et de distribution (100 ; 140 ; 142 ; 144, 146) comporte :
un quatrième arbre (116) qui est supporté afin qu'il puisse tourner et coulisser librement sur un second et un troisième organe de retenue (118 ; 122),
un premier bras (112) fixé au quatrième arbre (116),
un quatrième organe de retenue (104) ayant une première extrémité supportée par le premier bras (112) afin qu'elle puisse tourner,
un premier ressort (108) destiné à appliquer une force au quatrième organe de retenue (104) afin que celui-ci tourne,
une première pipette (102) fixée au quatrième organe de retenue (104),
une seringue raccordée à la première pipette (102),
un capteur (114) de détection du fait que le quatrième organe de retenue (104) a tourné malgré la force appliquée par le premier ressort (108),
un premier et un second organes rotatifs (124; 126) fixés par rapport au quatrième arbre (116) afin qu'ils puissent tourner,
un premier organe (128) de raccordement du premier et du second organes rotatifs (124 ; 126),
une troisième source d'entraînement (138) raccordée au premier et au second organes rotatifs (124; 126),
un guide (130) fixé au quatrième arbre (116) et destiné à limiter le déplacement du premier connecteur (128),
un second connecteur (132) placé sur le quatrième arbre (116) afin qu'il soit fixé axialement au quatrième arbre (116) et puisse tourner autour de ce quatrième arbre (116), et
une quatrième source (136) d'entraînement destinée à provoquer le déplacement rectiligne en translation du second organe de raccordement (132) suivant l'axe du quatrième arbre (116),
une surface à la masse étant placée au-dessous du récipient qui doit subir l'échantillonnage ou la distribution par la première pipette (102), un niveau de liquide dans le récipient étant détecté par détection d'un changement d'impédance entre la première pipette (102) et la surface à la masse lorsque la première pipette (102) est au contact ou non d'une surface de liquide dans le récipient.

4. Appareil selon l'une quelconque des revendications 1 à 3, dans lequel le moyen de nettoyage (150) comporte :
un cinquième arbre (260) mobile linéairement en translation dans la direction axiale,
une cinquième source d'entraînement destinée à entraîner le cinquième arbre (260),
un second bras (262) fixé au cinquième arbre (260),
un cinquième organe de retenue (276, 278) fixé au second bras (262),
une seconde pipette (264) supportée par le cinquième organe de retenue (276, 278) afin qu'elle soit mobile dans celui-ci, la seconde pipette (264) ayant un bout (265) qui a une encoche (267),
un second ressort (280) placé dans le cinquième organe de retenue (276, 278) et comprimé entre le cinquième organe de retenue (276, 278) et une saillie (268) placée sur la seconde pipette (264), et
une partie de nettoyage (270) fixée à la seconde pipette (264) et formant un espace (272) entre elle-même et une périphérie externe de la seconde pipette (264), la partie de nettoyage (270) ayant un orifice de distribution (274) qui communique avec cet espace (272).
